# FASCICULE DE BREVET EUROPEEN

(11) **EP 1 182 221 B1**
(45) Date de publication et mention de la délivrance du brevet: **30.08.2006**
(21) Numéro de dépôt: 01123750.0
(22) Date de dépôt: 30.07.1997
(51) Int. Cl.: C08G 18/80, C09D 175/04

(54) **Composition utile pour l'obtention de revêtement mat ou satiné, utilisation de cette composition et revêtement ainsi obtenu**
Zusammensetzung für die Herstellung einer matten oder seidigen Beschichtung, Verwendung dieser Zusammensetzung sowie daraus hergestellte Beschichtung
Composition for the preparation of a mat or satin coating, use of this composition and coating so obtained

(30) Priorité: 30.07.1996 EP 96401703
(43) Date de publication de la demande: 27.02.2002
(62) Demande divisionnaire de: 97935655.7
(73) Titulaire: RHODIA CHIMIE, 92512 Boulogne Billancourt Cedex (FR); Cray Valley Iberica, 08470 Saint Celoni, Barcelona (ES)
(72) Inventeur: Ardaud, Pierre, 69110 Sainte-Foy-Les-Lyon (FR); Williams, Francis John, 08450 Llinars des Valles (ES)
(74) Mandataire: Bernasconi, Jean Raymond

(56) Documents cités:
- EP-A- 0 009 694
- EP-A- 0 680 984
- DE-A- 3 328 131
- FR-A- 2 266 725
- US-A- 3 317 463

## Description

La présente invention a pour objet une nouvelle famille de compositions comportant des isocyanates masqués et des polyols. Elle concerne plus particulièrement des poudres, y compris des mélanges de poudres, et leur utilisation, notamment sous forme de poudre monocomposant (parfois désignées par leur appellation anglaise "one shot") dans des revêtements au moyen de poudres.

Pour des raisons liées à la protection de l'environnement et à la sécurité du travail, on cherche à éliminer de plus en plus dans les techniques de revêtement, et notamment de peinture, l'utilisation des solvants. Plus particulièrement La diminution des C.O.V (Composés Organiques Volatils) est une préoccupation de plus en plus actuelle dans l'industrie des peintures et vernis. Dans ce but, l'évolution des produits vers de plus hauts extraits secs permet de diminuer les quantités de solvants nécessaires pour atteindre la viscosité d'application, et donc réduire les solvants évaporés lors du séchage du film de peinture.

Une autre alternative est l'utilisation de produits en phase aqueuse où l'eau a remplacé les solvants organiques comme agent véhiculant le liant organique. Toutefois, une faible quantité de solvants organiques est nécessaire à la mise en oeuvre et à la formation du film de peinture. De plus, ils engendrent des résidus solubles dans l'eau dont le traitement peut être délicat et coûteux.

Dans ce contexte, des techniques de revêtement au moyen de poudres se développent de plus en plus. Il convient ici de détailler un peu cette technique pour mieux appréhender la présente invention. La technique met en oeuvre un matériau pulvérulent de très grande finesse pour lequel l'air va jouer le rôle de vecteur.

En général, une charge électrostatique de plusieurs Kilovolts appliquée entre un pistolet et la pièce à peindre va permettre d'attirer et de retenir la poudre précurseur du revêtement, poudre qui sera projetée par le pistolet d'application.

Une cuisson de la pièce entre 150 et 200°C permet alors la fusion, l'étalement puis la réticulation de la poudre de peinture (la peinture est considérée comme le paradigme des revêtements) afin d'obtenir une couche uniforme et homogène du revêtement.

Cette technique est non polluante et présente un rendement d'application voisin de 100% grâce à la possibilité de recyclage de la poudre non utilisée.

Parmi les familles de produits qui peuvent être mises en oeuvre dans ce domaine il convient de mentionner celles qui font l'objet du rappel ci-après :

La majorité du marché est occupée par les peintures poudres dites "hybrides Epoxy-Polyester", suivies des Polyesters et des Polyuréthannes, puis des poudres dites "Epoxy".

Pour obtenir une tenue en extérieur de qualité (notamment vis-à-vis du rayonnement U.V. et de l'humidité), il est impératif d'utiliser les revêtements à base de TGIC-Polyester ou de Polyuréthanne qui, seuls permettent d'atteindre les performances requises.

Les poudres de revêtement peuvent présenter plusieurs aspects de finition (aspect de surface, couleur, brillance, etc.).

La technique utilisée pour atteindre ces effets est différente pour les peintures conventionnelles liquides et les poudres.

Lorsque l'on désire modifier la brillance, l'ajout de certaines charges comme des silices, carbonates de calcium ou de barytes permet de réduire la brillance dans une gamme de 50 à 90%, mais des finitions mates ne peuvent pas être obtenues.

La demande EP-A-0 0680 984 décrit une composition pour peinture en poudre comportant des isocyanates masqués par des agents masquant de formule (I).

La demande FR 2 266 725 décrit des compositions pour peinture en poudre comprenant un polyester et un polyisocyanate bloqué par un p-hydrobenzoate d'alkyle.

Le document EP 0 009 694 décrit un vernis obtenu à partir d'une composition comprenant des groupes isocyanates partiellement bloqués par des esters éthyliques de l'acide malonique et acétique.

Toutefois, les peintures obtenues au moyen de ces compositions sont brillantes et présentent un coefficient de réflexion à 60° supérieure à 50%.

La demande DE-A-33 28 131 décrit l'obtention de revêtements mats au moyen d'isocyanates partiellement masqués avec du caprolactame.

Dans la présente invention, on définit comme système mat ou satiné un revêtement durci, lisse ou structuré qui, appliqué sur un support métallique, présentent un coefficient de réflexion au plus égal à environ 50% sous un angle d'incidence de 60°C.

Les systèmes toutefois les plus difficiles à obtenir correspondent à des revêtements franchement mats, c'est-à-dire présentant une brillance inférieure à environ 30%, pour un angle incident de 60°C ou à environ 40% selon un angle incident de 85°C.

Une des techniques les plus utilisées afin d'obtenir des finitions mates consiste en la combinaison de composés de réactivités très différentes.

Ceci est atteint par le mélange de poudres de peinture possédant des temps de gel court et long. De cette façon, une hétérogénéité microscopique sera obtenue en surface du revêtement, créant ainsi l'effet mat désiré.

D'autres techniques permettent de réduire la brillance des peintures. Elles consistent à utiliser des additifs ou des cires, mais d'une part, elles ne suffisent pas à elles seules et d'autre part lorsqu'elles sont utilisées seules, elles présentent en général des problèmes de reproductibilité et/ou des propriétés mécaniques vraiment insuffisantes, et/ou ne permettent pas d'être utilisées à l'extérieur à cause de leur jaunissement ou de la détérioration du film du fait des intempéries.

Le système le plus utilisé pour l'extérieur est celui connu sous le nom de mélange à sec (parfois désigné par le terme anglo-saxon de "dry-blend"), selon lequel on obtient une faible brillance en malaxant des peintures en poudre extrudées et broyées séparément présentant une réactivité très différente. Outre le fait que ce système prenne du temps et qu'il implique la fabrication (extrusion, broyage, malaxage) de plusieurs peintures, il présente une uniformité réduite du degré de brillance souhaité, ce qui demande des étapes plus nombreuses qu'usuelles et implique des coûts supplémentaires.

Il faut en outre que les composés issus des réactions de réticulation ne soient délétères ni pour la santé humaine ou animale, ni pour l'environnement.

Pour plus de détails sur les techniques de peinture en poudre, on peut se référer aux ouvrages suivants :
→ P. GRANDOU et P. PASTOUR : PEINTURES ET VERNIS :
   - I les constituants
   - Il techniques et industries ; édition Hermann ;
→ R LAMBOURNE:
   Paints and Surface Coatings. Theory and practice ; Edition Halsted press ;
→ POWDER COATING. THE COMPLETE FINISHER HANDBOOK ; the Powder coating institute ;
→ MYERS and LONG :
   TREATISE ON COATINGS, 5 VOLUMES ; Edition Marcel DEKKER.

C'est pourquoi un des buts de la présente invention est de fournir une composition qui permette d'obtenir des revêtements par la technique dite des poudres.

Un des buts de la présente invention est de fournir une composition qui permette d'obtenir des revêtements de bonne résistance aux intempéries.

Un des buts de la présente invention est de fournir une composition qui permette d'obtenir des revêtements mats et/ou satinés.

Un des buts de la présente invention est de fournir une composition du type précédent qui soit de mise en oeuvre aisée.

Ces buts et d'autres qui apparaîtront par la suite au moyen d'une composition pour peinture en poudre mate ou satinée qui comporte pour addition successive ou simultanée :
→ un isocyanate au moins partiellement masqué présentant une température de transition vitreuse (parfois désignée par l'abréviation anglo-saxonne Tg) d'au moins environ 20°C, avantageusement d'au moins 40°C) et un taux de libération (vis-à-vis de l'agent masquant) à 120°C d'au plus 5% ;
→ un polyol présentant les caractéristiques suivantes :
   ◆ une température de transition vitreuse (parfois désignée par l'abréviation anglo-saxonne Tg) au moins égal à environ 40°C, avantageusement au moins égal à environ 50°C ;
   ◆ un indice d'hydroxyle au moins égal à environ 10 mg/g, avantageusement au moins égal à environ 15 mg/g ;
   ◆ une masse moléculaire moyenne Mn au moins égale à environ 1000, avantageusement à 2000 g/mole, l'agent masquant étant tel que précisé dans la revendication 1.

(Dans la présente description le terme "environ" est employé pour mettre en exergue le fait que la valeur est arrondie et que, lorsque le, ou les, chiffres les plus à droite d'un nombre sont des zéros, ces zéros sont des zéros de position et non des chiffres significatifs, sauf bien entendu s'il en est précisé autrement).

Il est préférable que le groupe masquant porte l'hydrogène mobile réagissant avec la fonction isocyanate par l'intermédiaire d'un oxygène pour donner l'enchaînement -NH-CO-O- (c'est-à-dire R-NCO + HO- ----> R-NH-CO-O-)

Selon la présente invention, l'isocyanate est masqué par au moins un groupe masquant portant au moins une fonction dérivée des fonctions acide et notamment les fonctions acide et ester. Le masquage peut être mixte et mettre en jeu plusieurs groupes masquant.

Il est souhaitable que dans la structure du ou des isocyanates(s), la partie du squelette reliant deux fonctions isocyanates comporte au moins un enchaînement polyméthylène (CH₂)π où π représente un entier de deux à 10, avantageusement de 4 à 8. Cette préférence joue sur la matité et sur les performances mécaniques. Quand il y a plusieurs enchaînements, ces derniers peuvent être semblables ou différents. En outre, il est souhaitable que l'un au moins de préférence tous ces enchaînements soient libres en rotation et donc exocycliques.

Le taux de libération est quantifié par le test à l'octanol (voir infra).

Selon la présente invention, l'isocyanate masqué, pur ou en mélange, est issu d'un polyisocyanate, c'est-à-dire possédant au moins deux fonctions isocyanates, avantageusement plus de deux (possibilités de valeurs fractionnaires puisqu'il s'agit en général de mélange d'oligomères plus ou moins condensés), lequel est lui-même le plus souvent issu d'une précondensation ou d'une prépolymérisation de diisocyanate unitaire (parfois qualifié dans la présente description de "monomère").

D'une manière générale la masse moléculaire moyenne de ces prépolymères ou de ces précondensats est au plus égale à 2000 (un chiffre significatif), plus couramment à 1000 (un chiffre significatif de préférence deux).

Ainsi, parmi les polyisocyanates utilisés pour l'invention, on peut citer ceux dus type biuret et ceux dont la réaction de di- ou trimérisation a conduit à des cycles à quatre, cinq ou six chaînons. Parmi les cycles à six on peut citer les cycles isocyanuriques issus d'une homo- ou d'une hétéro-trimèrisation de divers diisocyanates seuls, avec d'autre(s) isocyanate(s) [mono-, di--, ou polyisocyanate(s)] ou avec du gaz carbonique (ou bioxyde de carbone), dans ce cas on remplace un azote du cycle isocyanurique par un oxygène. Les oligomères à cycles isocyanuriques sont préférés.

Les polyisocyanates préférés sont ceux qui présentent au moins une fonction isocyanate aliphatique. En d'autres termes, au moins une fonction isocyanate masquée selon l'invention est reliée au squelette par l'intermédiaire d'un carbone de type sp³ portant avantageusement un atome d'hydrogène, de préférence deux. Il est souhaitable que ledit carbone de type sp³ soit lui même porté par un carbone de type sp³ et avantageusement muni d'un, de préférence de deux atomes d'hydrogène, et ce pour éviter que la fonction isocyanate considérée soit en position néopentylique. En d'autres termes, il est conseillé de choisir comme monomère (lesquels sont, en général, porteurs de deux fonctions isocyanate) au moins un composé qui porte au moins une fonction aliphatique qui ne soit ni secondaire ou tertiaire, ni néopentylique.

En cas de mélange obtenu à partir de plusieurs (en général, deux) types de monomères, il est préférable que celui ou ceux des monomères qui répondent au conditions ci-dessus et/ou (avantageusement "et") à la condition sur la présence d'enchaînement polyméthylène (CH₂)π représentent au moins 1/3, avantageusement 1/2, de préférence 2/3, des fonctions isocyanates masquées. Ainsi au cours de l'étude selon la présent invention, il a été obtenu d'excellents résultats avec des mélanges comportant deux tiers d'HMDT ("trimère" d'Hexaméthylène diisocyanate) avec de l'IPDI ou de l'IPDT ("trimère" d'IPDI) les deux étant masqués selon l'invention (le nBDI, norbornane diisocyanate, et son trimère sont similaires).

On préfère bien sur le cas où la totalité des isocyanates sont aliphatiques, et même répondent au critère ci dessus.

Les agents conduisant au(x) groupe(s) masquant(s) caractéristique(s) de l'invention sont choisis parmi qui ceux qui sont issus de la condensation d'un dérivé aromatique hydroxylé sur le noyau et portant une fonction choisie parmi les fonctions nitriles, et de préférence carbonyles avec un isocyanate. Il va sans dire que la condensation se fait sur la fonction phénol.

Il convient de choisir parmi les membres de cette famille ceux pour lesquels il est possible de déterminer un point de fusion apparent, cette mesure étant réalisée à température ambiante (20°C). Ce point de fusion doit être au moins égale à 30°C (un chiffre significatif) avantageusement à 50°C.

L'agent masquant est de la formule (I):

Ar(R)ₙ(Y-Z)ₘ(OH)ₚ (I)

où Ar est un reste aromatique sur lequel est greffé n substituants R, m fonctions polaires Z choisies parmi les nitriles et les groupements carbonyles, et p fonctions hydroxyles.

Les valeurs de n, m et p sont telles que la somme n + m + p soit au plus égale au nombre de sommets substituables, avantageusement p est au plus égal à 2, de préférence il est égal à 1.

Avantageusement m est au plus égal à deux, de préférence m est égal à 1.

Avantageusement n est au plus égal à 3 de préférence choisi parmi zéro, un, et deux, plus préférentiellement égal à zéro.

R représente des substituants indifférents pour la réaction de masquage et en général correspond à des chaînes hydrocarbonées, le plus souvent des chaînes alcoyles au sens étymologique du terme, à savoir un alcool auquel on a enlevé sa fonction hydroxyle.

Deux substituants vicinaux R peuvent être reliés entre eux pour former un cycle qui peut être aromatique par exemple.

Z est avantageusement choisi parmi les groupements présentant une fonction carbonyle. Parmi ces fonctions, il convient de citer les fonctions alcoxycarbonyles (ou en d'autres termes les fonctions esters), la fonction amide, la fonction cétone avec la condition préférentielle qu'il n'y ait pas d'hydrogène acide [en d'autres termes la fonction n'est avantageusement pas porteuse d'hydrogène ou si elle en porte le pKa correspondant est au moins égal à environ 20 (un chiffre significatif de préférence deux) plus préférentiellement au moins égal à environ 25] en α de la fonction carbonyle (ester, cétone ou amide). Ainsi les amides (y compris lactame, voire urée) préférés sont avantageusement substitués de préférence suffisamment pour qu'il n'y ait pas d'hydrogène sur l'azote de la fonction amide ou de manière qu'il n'y ait pas d'hydrogène réactif.

Où Y est choisi parmi les groupements divalents, avantageusement -O-, -S-, NR'-,-CR'R"- avec R' et R" choisis parmi les radicaux hydrocarbonés, avantageusement alcoyles, de 1 à 6 atomes de carbone, avantageusement de 1 à 4, de préférence méthyle, plus préférentiellement hydrogène ; et de préférence Y représente une liaison simple.

Il est préférable que la, ou les fonctions polaires Z (en général choisies parmi la fonction nitrile et/ou les fonctions carbonyles) ne soient pas vicinales du groupe Z comme par exemple dans l'acide salicylique.

Le reste aromatique Ar est constitué d'un ou plusieurs noyaux avantageusement condensés, hétéro- ou homocycliques. Il est préférable que Ar ne comporte pas plus de deux noyaux, et de préférence pas plus d'un noyau.

Le reste aromatique Ar peut être constitué d'un ou plusieurs noyaux hétéro- ou homocycliques, le plus souvent homocyclique en raison de leur facilité d'accès. Il convient toutefois de souligner l'intérêt des hétérocycles à 6 chaînons qui présentent une température de libération très inférieure à celle des homocycles correspondants.

Il est souhaitable que le nombre total de carbones du dérivé aromatique hydroxylé sur le noyau soit au plus égal à 20, de préférence à 10 (un chiffre significatif).

Ce noyau est avantageusement à 6 chaînons, les chaînons étant constitués de carbone ou d'azote avec le nombre de substituants nécessaire à la valence de ces atomes.

Parmi les acides et dérivés, notamment esters, donnant les résultats les plus satisfaisants, il convient de citer les acides greffés sur un noyau benzénique ou sur des noyaux pyridiniques. Ainsi, les acides métahydroxy-, et surtout parahydroxybenzoïques, et leurs dérivés donnent de bons résultats.

Ainsi que cela a été mentionné ci dessus il est possible de prévoir plusieurs groupes (de préférence deux pour des raisons d'économie) masquant les fonctions isocyanates. Cette diversité peut être réalisée par mélange de divers composés masqués (En général par un seul groupe) ou de préférence par coréaction. Ces groupes masquants peuvent être tous tels que défini ci dessus ou bien ne répondre que pour certains d'entre eux à de telle définition. Dans ce dernier cas il est préférable que ceux (c'est-à-dire la somme de ceux) qui sont porteurs d'une fonction carbonyle (ester ou acide) répondent avantageusement à la formule ci dessus (I) et correspondent au moins à environ 10% (exprimée en fonction isocyanate bloquée), avantageusement à environ 20%, de préférence à 1/3.

La présence d'une fonction acide carboxylique (-COOH) et notamment d'une fonction acide carboxylique directement greffée sur un noyau aromatique, avantageusement un noyau benzénique permet d'une part d'augmenter la température de fusion de l'isocyanate bloqué et d'autre part d'augmenter significativement la matité du revêtement après réticulation (Par exemple la peinture finale). Il est toutefois préférable pour préserver les excellentes qualités mécaniques du système selon la présente invention que la quantité de fonction acide présente (en équivalent) soit au plus égale à environ 9/10, avantageusement à environ 4/5, de préférence à 2/3 des fonctions isocyanates masquées. Les effets fastes des fonctions acides sur la matité et sur la température de transition vitreuse (Tg) se font déjà sentir à partir d'environ 10% mais il est souhaitable d'atteindre une proportion d'au moins 20%. En outre à ce niveau de concentration et au delà les fonctions acides facilitent l'apparition d'irrégularités donnant un aspect dit structuré". La température de fusion et de la température de transition vitreuse (Tg) croissent continûment avec la teneur en acide jusqu'à 100%.

Une des mises en oeuvre parmi les plus intéressantes consiste à utiliser des isocyanates masqués au moins partiellement par un composé porteur d'une fonction acide, avantageusement par un composé de formule I où Z est un fonction acide. Il est conseillé que l'isocyanate soit alors masque par un autre groupe que celui porteur de la fonction acide et que la fonction acide du système masquant soit compris entre 90 et 10% (exprimé en fonction isocyanate bloqué). L'autre ou les autres agents masquant peuvent être soit des agents masquant en eux-mêmes connus (répondant au contraintes de température de libération, ou de démasquage, spécifiée dans la présente description), soit un ester répondant à la formule I. C'est ce dernier terme de l'alternative qui est préféré. Pour les synthèses des ces composés on peut se reporter aux modes opératoires généraux de la demande de brevet N° EP0680 984 A qui donne de bons résultats pour l'opération de masquage (éventuellement partielle) par un composé de la formule I.

Lorsque l'on utilise un unique agent de masquage il est souhaitable que ce soit un composé selon la formule I où Z est ester, avec les préférences indiquées dans la demande de brevet N° EP0680 984 A page 2 lignes 41 à 50.

Comme cela a déjà été déjà mentionné selon la présente invention, il est préférable que le point de fusion du composé ou du mélange de composés obtenu présente un point de fusion apparent au moins égal à 30°C, de préférence 50°C. Selon l'invention la température de transition vitreuse est au moins égale à 20°C avantageusement à 40°C.

Il est préférable de choisir les composés selon la présente invention de manière qu'ils réagissent complètement avec un alcool primaire à 250°C en moins d'une demi-heure.

On considère que la réaction est complète si elle est réalisée à 90% ou plus.

Ainsi que cela à été mentionné plus haut, les isocyanates pour lesquels l'invention est la plus intéressante sont ceux dont l'atome d'azote est lié à un carbone d'hybridation sp³, et plus particulièrement aliphatiques, et notamment aux polyméthylènes diisocyanates (Par exemple TMDI TétraMéthylène-Dilsocyanate et HMDI [HexaMéthylèneDilsocyanate = OCN - (CH₂)₆ - NCO]) et leurs différents dérivés de condensation (biuret, etc.) et de di- et de "trimérisation" (dans le domaine considéré on appelle trimère les mélanges issus de la formation de cycles isocyanuriques à partir de trois fonctions isocyanates ; en fait, il y a, à coté du trimère vrai, des produits plus lourds issus de la trimérisation).

Selon la présente invention, le pourcentage de fonction isocyanate libre résiduelle est au plus égal à 5%, avantageusement à 3%, de préférence à 1%. Les points de fusion ou de transition vitreuse les plus élevés sont obtenus avec des pourcentages ne dépassant pas 0,5%. Les teneurs en dérivés aromatiques hydroxylés sur le noyau sont également avantageusement faibles, c'est-à-dire au plus égales à 5%, avantageusement à 3%, de préférence à 1 %.

Si l'on se réfère aux composés utilisables comme polyols de la composition selon l'invention, ceux qui permettent d'obtenir le plus aisément des peintures ou des vernis en poudre de faible brillance sont des résines acryliques hydroxylées et/ou polyesters saturés ou insaturés hydroxylés, linéaires ou ramifiés, présentant un poids moléculaire approprié, et susceptibles d'être réticulées par une réaction avec un prépolymère d'isocyanate (c'est-à-dire un isocyanate au moins partiellement masqué selon l'invention).

Ledit prépolymère est fourni avec des fonctions actives masquées (ou bloquées) et il est thermiquement activé par la libération de l'agent bloquant, en échangeant les groupes isocyanates qui réagissent avec les groupes hydroxyles du liant, en présence ou en l'absence de catalyseurs.

Ce système permet d'obtenir des peintures en poudre présentant une viscosité en fusion appropriée et une température de transition vitreuse supérieure à 40°C, entraînant une stabilité chimique et physique lors du stockage.

L'éventuelle fonctionnalité du carboxyle, qui définit le poids moléculaire du polymère, permet ainsi une double réticulation avec des résines époxy aromatiques ou aliphatiques et/ou des hydroxyalkylamides.

Ledit excès de groupes acides est déterminé par l'indice d'acidité de celui-ci, exprimé en milligrammes d'hydroxyde de potassium nécessaires pour neutraliser l'acidité libre d'un gramme de polyol (parfois désigné par "résine").

L'indice d'hydroxyle correspond aux milligrammes d'hydroxyde de potassium nécessaires par gramme de résine pour neutraliser l'excès d'acide acétique libéré lors de l'acétylation (par l'anhydride acétique) du polymère hydroxylé. Pour plus de détail on peut se rapporter à la norme ASTM-E222.

L'indice d'hydroxyle du polymère peut varier entre 10 et 350 mg. KOH/g, de préférence entre 15 et 80. L'indice d'acidité est au plus égal à environ 20 mg KOH/g, avantageusement au plus 15 mg KOH/g; il est en outre avantageusement d'au moins 2 mg KOH/g, de préférence d'au moins 4 mg KOH/g. Un bon choix consiste à prendre des polymères hydroxylés dont l'indice d'acide est compris de préférence entre 3 et 15 mg KOH/g.

Le poids moléculaire en chiffre, M̅n, du liant ou polymère hydroxylé de la présente invention varie entre 2000 et 15000 g/mol. Le poids moléculaire est déterminé par chromatographie par perméation du gel (GPC). La technique utilise comme gels, deux gels de polystyrène (ultrastyragel® à 10⁴ et 500 A̅), le THF comme solvant et le soufre comme standards.

Il est souhaitable que le degré de ramification (c'est-à-dire le nombre moyen de fonction OH libre par molécule) soit compris entre 2 et 4, avantageusement entre 2,5 et 3.

La matité croît avec la ramification. La ramification peut être obtenue en utilisant des polyols de fonctionnalité supérieure à deux (en général des triols) ou des polyacides (souvent utilisés sous la forme d'anhydride pour réduire la quantité d'eau dégagée pendant la réaction) de fonctionnalité supérieure à deux. Ce dernier cas est préféré pour la matité. En particulier l'acide trimellitique, surtout sous la forme d'anhydride est très favorable.

Dans le cas de l'utilisation de polyesters hydroxylés pour la présente invention, on emploie le produit de l'estérification d'un ou plusieurs acides ou anhydrides di- ou polycarboxyliques, aliphatiques, aromatiques ou cycloaliphatiques ou leurs esters méthyliques, qui comptent 2 à 36 atomes de carbone.

Par exemple, on peut citer l'acide adipique, l'acide succinique, l'acide sébacique, l'acide subérique, l'acide azélaïque, l'acide décanedicarboxylique, l'acide glutarique, l'acide téréphtalique, l'acide isophtalique, l'acide ou l'anhydride phtalique, l'acide naphtalènedicarboxylique, l'acide ou l'anhydride hexahydrophtalique, l'acide 1,4-cyclohexanedicarboxylique, des acides gras dimérisés, l'anhydride trimellitique.

Le poids moléculaire du polymère peut être réglé par l'ajout d'acides monocarboxyliques ou de leurs esters méthyliques, aliphatiques ou aromatiques ayant 2 à 18 atomes de carbone

Le pourcentage du ou des acides(s) ou anhydride(s) décrit(s) précédemment dans l'ensemble du polymère varie entre 20 et 70%, de préférence 30 et 60%, pris individuellement ou mélangés.

Si le polymère de la présente invention est insaturé, on utilise des acides ou anhydrides di- ou polycarboxyliques insaturés en oléfines comme l'acide ou l'anhydride maléique, l'acide ou l'anhydride tétrahydrophtalique, l'acide fumarique, l'acide ou l'anhydride hexachloroendométhylènetétrahydrophtalique, l'acide méthylmaléique, l'acide itaconique ou des dérivés du dicyclopentadiène, méthylmaléique, de l'acide itaconique, maléique ou fumarique.

Parmi les alcools polyhydroxylés utiles pour la synthèse du polyester figurent : l'éthylèneglycol, le 1,2- ou 1,3-propylèneglycol, le 2- méthylpropanediol, le diéthylèneglycol, le dipropylèneglycol, le 1-4-butanediol, le 2,3-butylèneglycol, le 1,6-hexanediol, le 1,5-pentanediol, le néopentylglycol, le cyclohexanediméthanol, le triéthylèneglycol, l'hydroxypivalate de néopentylglycol, le tétraéthylèneglycol, le polyéthylèneglycol, le polypropylèneglycol, le dibutylèneglycol ou les polyéthylèneglycols, le triméthylpentanediol, le butyléthylpropanediol, la glycérine, le triméthylolpropane, l'hexanetriol, le pentaérytritol, le sorbitol, le triméthyloléthane, le tris(2-hydroxyéthyle)-isocyanurate. Le pourcentage de ceux-ci peut varier entre 10 et 60%, de préférence entre 10 et 50%

Pour la préparation des polyesters et notamment lors de la création ou de la transformation de la liaison ester il est indiqué d'utiliser des catalyseurs connus "per se" pour l'estérification ; ces catalyseurs qui peuvent se retrouver dans la composition finale, peuvent être utilisés seuls ou en mélange. Parmi les catalyseurs utilisables dans le cadre de la présente invention, Il convient de citer plus particulièrement ceux qui sont à base d'acide protique (surtout ceux qui sont organiques) ou de Lewis, avantageusement organique. Plus spécifiquement parmi les acides organiques protiques on peut citer les acides sulfoniques, dont les plus courants sont les acides paratoluène sulfonique et méthane sulfonique. Parmi les acides de Lewis, il convient de citer ceux à base de titane tels que le tétrachlorure de titane, titanate de tétra n-butyle et d'isopropyle, tétrakis(2-éthylhexyl)titanate, acétylacétonate de titane, titanate de stéaryle, titanate de nonyle, titanate de cétyle, ceux à base de vanadium tels que vanadate d'isopropyle ou de n butyle, ceux à base de Zirconium tels que le tétrachlorure de Zirconium, le zirconate de n propyle ou de n butyle, ceux à base d'étain tels que les chlorures d'étain anhydres ou hydratés, oxyde de dibutylétain, octoate d'étain, hexanoate de butylétain, oxalate d'étain, oxyde de monobutylétain, dihydroxyde de monobutylchloroétain, dilaurate de dibutylétain, diacétate de dibutylétain, tris-(2- éthyl héxanoate) de monobutylétain L'utilisation des catalyseurs ci-dessus est particulièrement intéressante dans le cas des polyesters saturés hydroxylés, et ce en pourcentage masse avantageusement compris entre 1/2 et 2% (en masse) par rapport à l'ester hydroxylé saturé.

L'adjonction des composés des types précédents permet notamment de réduire les temps de fabrication et l'émission de composé volatile et l'optimisation de la coloration finale des ces polyols particulièrement bien adapté à la présente invention.

Dans le cas où l'on part d'ester méthylique (d'acides di- ou polycarboxyliques), il est très souhaitable d'utiliser ceux des catalyseurs ci-dessus qui sont connus pour bien catalyser la transestérification ou d'en introduire d'autres connus pour ce faire. Par exemple les carboxylates de zinc, le trioxyde d'antimoine ou tout autre catalyseur connu de l'homme de métier dans le domaine de la technique de la condensation. Les quantités à utiliser sont avantageusement entre 1/2 et 1% (en masse) de la charge initiale.

Pour améliorer ou protéger le polymère de la coloration pendant le processus d'estérification, outre le fait de travailler en atmosphère inerte, il est préférable d'ajouter des additifs antioxydants tels que le phosphite de triphényle, le phosphite de tris nonylphényle, le diphosphite de stéarylpenta érythritol, ou leurs équivalents. De préférence on utilise ces composés en quantité au moins égale à 5 pour mille et au plus égale à 15 pour mille.

Pour obtenir le polyester mentionné ci-dessus, on utilise les techniques en elles-mêmes connues. On peut citer les conditions réactionnelles usuelles à savoir :
- température finale comprise entre environ 200°C et 260°C,
- pression absolue comprise entre 5 HectoPascals et 800 kiloPascals.

Il convient de contrôler, l'indice d'acidité, l'indice d'hydroxyle, on ajuste l'alcalinité au point permettant d'obtenir les meilleures propriétés de recouvrement du polyuréthanne. Alors, et avant la décharge, en principe dans une enceinte réfrigérée, on procède à l'incorporation des catalyseurs, antioxydants, et tout additif requis par l'application finale.

Les polyesters utilisés pour la présente invention présentent une température de transition vitreuse (Tg) comprise entre 40 et 80°C, de préférence entre 50 et 70°C, afin de conférer au système la stabilité nécessaire lors du stockage. Il est possible d'utiliser des mélanges de polyesters amorphes et cristallins, dont les proportions appropriées doivent permettre une bonne stabilité, aussi bien chimique que physique. La Tg du polymère est déterminée par calorimétrie par analyse différentielle (DSC).

Dans le cas où on utilise des polymères acryliques hydroxylés, pour la présente invention, on emploie un seul liant, la Tg étant comprise entre 40 et 100°C, ou bien des mélanges comprenant 0 à 30% d'un polymère acrylique, la Tg étant comprise entre -20 et 50°C, et 70 et 100% d'un polymère acrylique hydroxylé, la Tg étant comprise entre 40 et 100°C. Avec ledit mélange, le système peut être traité facilement et présente une bonne stabilité lors du stockage ainsi que de bonnes propriétés chimiques et mécaniques.

Les polymères acryliques hydroxylés peuvent être obtenus en faisant réagir des monomères alpha, bêta insaturés en éthylène, en particulier des monomères vinyles aromatiques et des esters d'acides carboxyliques alpha, bêta insaturés en éthylène. On peut citer, par exemple, le styrène et ses dérivés, tels le méthylstyrène ou le chlorostyrène ; dans le cas de produits d'extérieur, ils sont présents dans des quantités comprises entre 5 et 54%, de préférence entre 10 et 25% de l'ensemble des monomères. Des quantités inférieures à 5% peuvent affecter la résistance à la corrosion.

Parmi les esters d'acides alpha, bêta insaturés en éthylène, on peut citer les esters d'acide acrylique et méthacrylique comme l'acrylate de méthyle, l'acrylate d'éthyle, l'acrylate de butyle, l'acrylate de 2-éthylhexyle, l'acrylate de dodécyle, le méthacrylate de méthyle, le méthacrylate d'éthyle, le méthacrylate de butyle, le méthacrylate de 2-éthylhexyle, le méthacrylate laurique. De préférence, les esters d'insaturés sont présents dans une quantité comprise entre 5 et 8%, et correspondent à un mélange d'esters d'alcoyle ayant 1 à 3 atomes de carbone et 4 à 20 atomes de carbones, par exemple un mélange de méthacrylate de méthyle et d'acrylate de butyle.

La fonctionnalité hydroxyle du polymère acrylique est conférée par la copolymérisation de monomères ayant des groupes hydroxyles, comme le méthylacrylate d'hydroxyéthyle et l'acrylate, l'acrylate d'hydroxypropyle et le méthacrylate dans des quantités comprises entre 5 et 80%, ce pourcentage, portant sur l'ensemble des monomères, étant nécessaire pour obtenir l'indice d'hydroxyle indiqué.

Le polymère acrylique peut présenter un certain indice d'acidité, normalement inférieur à 15 provenant de l'ajout d'acide acrylique, méthacrylique, itaconique ou fumarique et/ou d'acide ou anhydride maléique.

Pour préparer lesdits polymères acryliques, les différents monomères sont mélangés et on les fait réagir par polymérisation de radicaux libres. Parmi les initiateurs pouvant être utilisés, on peut citer notamment le peroxyde de benzoyle, l'hydropéroxyde de tertiobutyle, le péroxyde de ditertiobutyle, l'azo-bis-isobutyronitrile. Pour régler le poids moléculaire, on peut utiliser des agents de transfert de chaîne comme l'acide mercaptopropionique, dodécyle et de mercaptan laurique. La polymérisation est effectuée en solution, en utilisant un solvant dans lequel les monomères sont solubles comme le toluène, le xylène, l'acétate de butyle, l'acétate de propylèneglycolméthyléther, entre autres. Une fois la polymérisation achevée, le mélange de réaction se volatilise, sous vide, pour éliminer le solvant organique et récupérer le polymère solide. La teneur résiduelle en solvants ou composés volatils doit être inférieure à 0,5%.

Lorsque l'on utilise les polymères acryliques hydroxylés répondant au conditions décrites ci-dessus, on obtient, certes, une réticulation satisfaisante avec un prépolymère à fonctions isocyanates masquées selon la présente invention., avec la matité désirée, mais les propriétés mécaniques restent insuffisantes pour les usages soumis aux intempéries. Aussi est-il préféré d'utiliser les systèmes polyesters saturés et polyisocyanates.

L'indice d'acidité que présente le polymère de la présente invention permet de faire réagir les groupes carboxyles avec des polyépoxydes aliphatiques, aromatiques et/ou bêta-hydroxyalkylamides, et on obtient ainsi une réticulation double.

Ainsi que cela a été mentionné précédemment les catalyseurs d'estérification peuvent se retrouver dans le polyester final et jouer un rôle dans la matité. Pour améliorer la reproductibilité de cet effet et en faire bénéficier les di- ou polyalcools polyacryliques, il est préférable pour avoir une bonne matité de vérifier la présence et le cas échéant d'ajouter un catalyseur d'estérification (y compris de transestérification).

Il convient d'assurer une teneur en catalyseur du liant, au moins égale à 0,5‰, avantageusement à 1‰, de préférence à 2‰, il est préférable que la teneur ne dépasse pas en masse 5%, avantageusement 3%, de préférence à 2%. Comme la plupart des catalyseurs sont à base d'élément à caractère métallique, il peut être plus pratique d'exprimer cette caractéristique en équivalent atomique. Dans ce cas on exprime qu'il convient d'atteindre une teneur au moins égale à 0,003 équivalent par kg masse (de liant), avantageusement à 0,005, de préférence à 0,01 équivalent, il est préférable que la teneur ne dépasse pas en masse 0,3 équivalent, avantageusement 0,2 équivalent, de préférence à 0,1 équivalent par kg masse (de liant).

Les catalyseurs d'estérification donnant le meilleur mat sont des catalyseurs présentant l'une des, de préférence les deux caractéristiques suivantes:
- une faible liposolubilité ;
- une forme solide, avantageusement cristallisée.

En ce qui concerne la faible liposolubilité, il convient de mentionner que ces catalyseurs préférés sont peu ou non solubles dans les milieux (chlorobenzène + octanol) du test à l'octanol (voir infra).

En général pour répondre à ces conditions, il est préférable de choisir les sels [présentant une activité catalytique] minéraux et ou les sels organiques (y compris les sels dérivé des hydrocarbures comme par exemple ceux correspondant à "l'anion" CH₃CH₂⁻, mais il ne sont pas les plus avantageux) tel que sulfonate, carboxylate, acétylacétonate, phosphate, phosphonate, phosphinate, présentant peu de maillons méthylène ou méthyle, avantageusement en moyenne au plus 3 par anion (par exemple le dianion malonique [⁻OOC-CH₂-COO⁻] présente 1/2 méthylène par anion), de préférence au plus 2, plus préférentiellement au plus 1 ; et même zéro.

En ce qui concerne la forme solide il est préférable que le point de fusion soit supérieur à celui de mélange, notamment par extrusion.

Parmi les catalyseurs, donnant de particulièrement bons résultats, il convient de citer les sels d'étain II, tels que pyruvate, oxalate, halogénure et notamment chlorure (qui présentent en outre l'intérêt de donner une surface dite stucturée). Ce catalyseur favorisant le matage peut être introduit à diverses étapes de la préparation de la peinture poudre notamment pendant le malaxage précédant la dernière extrusion ou pendant les opérations précédentes. En particulier dans le polyols après la condensation.

L'utilisation de ces polyols contenant au moins un des catalyseurs ci dessus, est particulièrement favorable pour la mise en oeuvre de la présente invention (pour le calcul des concentrations on peut utiliser les données ci-dessus pour le liant, en tenant compte du fait que le polyol représente 80% du liant). On peut également utilise des polyols jouant le rôle de produit vecteur du catalyseur facilitant son conditionnement dans le mélange final. Dans ce cas la concentration en masse est supérieure aux valeurs dans le liant énoncées ci dessus et peut atteindre 25, voire 50%.

Le liant de la présente invention permet d'obtenir des peintures mates (faible brillance), lisses, structurées, texturées et d'autres effets comme l'effet de grenaille, en utilisant les additifs, charges, pigments et procédés de fabrication connus par les personnes familières avec la fabrication de revêtements en poudre. La présence de cires (matifiante) dans la composition pour revêtement, permet d'améliorer la matité. Mais elle favorise la formation de microcratère qui sont à éviter dans certaines utilisations de la peinture. Compte tenu de ce qui précède l'homme de métier choisira ou on d'utiliser ces cires.

Ces cires, en elles mêmes connues, peuvent être choisies parmi les polyoxydes d'éthylène, sont ajoutées dans une proportion allant de 0 à 5% par rapport au liant (en masse).

Elles peuvent également être choisies parmi les mélanges de polyoxydes d'éthylène du type ci-dessus et d'hydrocarbures fluorés, avantageusement perfluorés et notamment parmi les polymères du tétrafluoroethène (PTFE). Dans le cas des hydrocarbures fluorés, il est préférable de ne pas dépasser significativement 1 %. On les utilise en général à une teneur supérieure à 0,1% par rapport au liant.

L'ensemble des charges et pigments peut atteindre 2/3 de la masse du liant.

Dans la formulation de peintures, on doit trouver les pigments appropriés qui permettent d'obtenir la couleur souhaitée, ceux-ci pouvant varier entre 1 et environ 50% en poids de la totalité de la peinture en poudre. On peut ainsi utiliser des charges dans la formulation dans des quantités comprises entre 5 et 40%.

Parmi les pigments, il convient de faire une mention spéciale du bioxyde de titane. En effet ce pigment peut jouer un rôle neutre ou favorisant l'aspect mat selon le prétraitement choisi. Il est apparu que les oxydes de titane ayant subi un traitement silice (et éventuellement alumine) augmentait significativement la matité, celui ayant l'effet le plus important étant celui vendu sous la dénomination Titafran RL68 (maintenant vendu sous la dénomnation rhodo RL 68).

Les bioxydes de titane traités à l'oxyde de zirconium n'ont que peu d'influence sur la matité.

L'homme de métier peut ainsi aisément moduler le caractère satiné ou mat en jouant sur bioxyde de titane utilisé.

La peinture ou les vernis selon la présente invention peuvent contenir les divers types d'additifs, en eux-mêmes connus, tels qu'agents dégazants, de nivellement, antioxydants et absorbant les U.V. (anti U.V.). Ils peuvent également contenir les divers adjuvants de matité connus pour améliorer cette dernière.

Ainsi, comme agent dégazant recommandé on peut citer la benzoïne, notamment présente en quantité comprise entre 0,5 et 3%, laquelle permet aux composés volatils de se libérer du film pendant le durcissement et d'empêcher des défauts comme la formation de cratères ou de piqûres.

Les additifs d'étalement recommandés sont les polymères acryliques, les polymères fluorés ou les siloxanes polymères, dans des quantités comprises entre 0,5 et 5% ajoutés directement, en tant que "master-batch" (mélange maître) dans des polymères appropriés ou absorbés dans de la silice.

Pour améliorer la tenue en extérieur, la résistance à la surcuisson ou au durcissement dans des fours à injection directe de gaz, on recommande d'ajouter aux formulations des compositions absorbant les U.V. et/ou antioxydantes du type primaire et/ou secondaire, du type phénolique ou des phosphites d'alcoyle/aryle. Lesdits additifs peuvent être présents dans la formulation dans une quantité comprise entre 0,5 et 2% de l'ensemble de la peinture.

Pour réduire la température de durcissement (de réticulation), on peut ajouter à la formulation des catalyseurs de formation d'uréthanne comme le DBTDL (dibutyldilaurate d'étain), ajoutés directement dans le prémalaxage ou en tant que mélange maître.

Les peintures en poudre mate, qui font l'objet de la présente invention, peuvent avantageusement être fabriquées en malaxant en fusion les composés de la formulation. D'abord, on les prémalaxes dans un malaxeur puis on les faits fondre, on les homogénéises et les disperses dans une extrudeuse à une ou plusieurs vis.

Il est souhaitable que la température de mélange de malaxage et d'extrusion soit au plus égale à environ 130°C, avantageusement à environ 110°C, de préférence à 100°C (3 chiffres significatifs). Il est souhaitable que la température d'extrusion soit au moins égale à environ 60°C, avantageusement à environ 70°C, de préférence au alentours de 80-90°C. On laisse refroidir la matière extrudée obtenue, on la passe dans un moulin jusqu'à l'obtention d'une peinture présentant la granulométrie souhaitée (en général, d₉₀ est au plus égale à environ 200 micromètres, avantageusement à 100 micromètres (2 chiffres significatifs) et d₁₀ au moins égale à environ 20 micromètres avantageusement à environ 50 micromètres) en vue de son application sur des supports métalliques comme l'acier, l'aluminium ou d'autres alliages, le verre, le plastique, le bois.

Le rapport entre le(s) polyol(s) et le(s) isocyanate(s) est défini par la stoechiométrie de déblocage. On choisit en général la quantité stoechiométriquement nécessaire d'isocyanate pour réagir avec la totalité des hydroxyles libres, avec une tolérance de 20%, avantageusement de 10%, de préférence de 5%. Comme il est préférable d'être en excès d'isocyanate, on préfère les fourchettes légèrement décalées. En d'autres termes, la quantité d'isocyanate à ajouter est avantageusement au moins égale à environ 90% et au plus égale à environ 120% de la quantité stoechiométrique ; de préférence elle est au moins égale à 95% et au plus égale à environ 110% de la quantité stoechiométrique ; l'intervalle le plus fréquent et donc le plus souhaitable étant au moins égal à 100% (3 chiffres significatifs) et au plus égale à 105% de la quantité stoechiométrique. Lorsque l'on utilise des systèmes présentant une forte proportion d'acide libre (par exemple au moins 2/3 des fonctions isocyanates masquées, voir supra) on peut envisager d'augmenter le rapport entre isocyanate et fonction hydroxyle de 10 à 30 points (%) environ par rapport au valeurs ci-dessus.

La poudre obtenue peut être appliquée avec un pistolet électrostatique ou par un lit fluide. L'application préférée de la présente invention est celle effectuée avec le pistolet électrostatique à charge et à effet Corona ou par frottement (triboélectrique).

Le substrat sur lequel la peinture est appliquée, principalement de l'acier, l'aluminium, peut ou non être préchauffé avant l'application. Une fois appliquée, la poudre est fondue et durcie au four pendant 10 minutes à 2 heures, à une température comprise entre 140 et 220°C selon que le système est ou non catalysé en général pendant 10 à 30 minutes à une température variant de 180°C à 220°C.

Compte tenu de ce qui précède l'homme de métier adaptera la cuisson en se rappelant que l'augmentation de la température de cuisson permet de diminuer la durée et réciproquement.

La présente invention sera mieux comprise à l'aide des exemples illustratifs suivants dans lesquels sont comparés les différents systèmes des peinture mate pour l'extérieur/l'intérieur, afin d'indiquer les points favorables du système proposé.

### TEST A L'OCTANOL - définitions

| | |
|---|---|
| température de "libération" : (ou de "déblocage") | c'est la température la plus faible à laquelle l'agent de masquage de l'isocyanate masqué est déplacé à hauteur de 9/10 (arrondi mathématique) par un monoalcool primaire (l'alcool primaire est en général l'octanol). |
| durée de vie au stockage | : Pour s'assurer, une bonne durée de vie au stockage, il est préférable de choisir des fonctions isocyanates masquées dont le test à l'octanol montre une "libération" à 80°C, avantageusement à 90°C, au plus égale à 90%. |
| Avancement de la réaction : | On considère que la réaction est complète si elle est réalisée à plus de 90%. |

### MODE OPERATOIRE

Dans un tube, type SCHOTT, avec agitation magnétique, on charge environ 5 mmol en équivalent NCO masqué protégé à évaluer.

On ajoute 2,5 à 3 ml de dichloro-1,2 benzène (solvant) l'équivalent d'octanol-1 (5 mmol, soit 0,61 g et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, Masse et infra rouge.

A Partir de ces données, on évalue le pourcentage de fonction isocyanate masquée condensée avec l'octanol-1.

### PRODUITS UTILISES

Les produits utilisés dans les exemples ci-après sont souvent désignés par leur dénomination commerciale. Ces produits sont décrits dans des fiches techniques dont on trouvera les références dans le tableau suivant :

| nom commercial | mise sur le marché par | type de produit chimique | référence de fiche technique | date de la publication |
|---|---|---|---|---|
| PT810 | CIBA GEIGY | glycidyl isocyanurate | 37236/f 750.313:15 | |
| BYK- 360 P | BYK Chemie GmbH | polyacrylate adsorbé sur silice | SM 18 | juin 1993 |
| Ceraflour 961 | BYK CERA | cire de polyéthylène micronisée | XM 961 | septembre 1995 |
| DT 3329-1 | CIBA GEIGY | cire | | avril 1994 |
| XB 4957 | CIBA GEIGY | agent matifiant | Best. Nr 93118 | novembre 1993 |
| Primid XL 552 | EMS | durcisseur hydroxyalkyamide | 7.2.1 | |
| accélérateur DT 3126 | CIBAGEIGY | | 38037/F 900.110/20 | janvier 1990 |
| REAFREE 3300 | RESISA | polyester saturé hydroxylé | 3300/950119 | janvier 1996 |
| REAFREE 7000 | RESISA | polyester saturé hydroxylé * | 7000/960725 | juillet 1996 |
| REAFREE 4001 | RESISA | polyester saturé carboxylé | 4001/960329 | mars 1996 |
| REAFREE 4401 | RESISA | polyester saturé carboxylé | 107370/960221 | février 1996 |
| REAFREE 8580 | RESISA | polyester saturé carboxylé | 107240/930309 | mars 1993 |
| REAFREE 8180 | RESISA | polyester saturé carboxylé | 8180/960521 | mai 1996 |

| | | | | |
|---|---|---|---|---|
| *Le lot utilisé pour les exemples g et f de ce polyester hydroxylé comportait une proportion non négligeable de catalyseur d'estérification résiduel. | | | | |

### Définitions de sigles d'abréviations et marges d'indétermination

IPDT = trimère d'ipdi (isophorone diisocyanate)
HDT = trimère d'd'HDI (Hexamethylène diisocyanate)
PHBM indique que le blocage est réalisé par du parahydroxybenzoate de méthyle
PHBA indique que le blocage est réalisé par de l'acide parahydroxybenzoique
Les brillances sont mesurées avec une indétermination de 5 % (absolu)

Les exemples A à E et G sont comparatifs.

### EXEMPLE A

Deux formulations de peinture pigmentée blanche en poudre résistante à l'extérieur utilisant des polyesters de réactivité et de rapport avec la TGIC différentes ont été obtenues comme suit :

| | nom commercial | composition poudre N°1 | composition poudre N°2 |
|---|---|---|---|
| constituants | | Parties en masse (grammes) | |
| Polyester carboxylé 90/10 | REAFREE 4001 | 540,0 | - |
| Polyester carboxylé 96/4 | REAFREE 4401 | - | 576,0 |
| Triglycidylisocyanurate | Araldite PT810 (Ciba) | 60,0 60,0 | 24,0 24,0 |
| Benzoine | | 3,0 | 3,0 |
| Agent d'étalement | Byk 360P de Byk-Chemie | 9,0 9,0 | 9,0 9,0 |
| Bioxyde de Titane | de RL 60 de Rhône Poulenc | 300,0 | 300,0 |

Les composants de chacune des peintures sont malaxés dans un malaxeur puis homogénéisés séparément et par fusion dans une extrudeuse à une seule vis du type Büss PCS-30, à une température comprise entre 80 et 120°C. On laisse refroidir la matière extrudée et on l'écaille sur des rouleaux de refroidissement, elle est broyée et classée selon la forme souhaitée. Une fois les deux peintures obtenues, on malaxe 1/1 dans un malaxeur à haute intensité. Une fois l'homogénéisation effectuée, on applique de façon électrostatique la poudre résultant du mélange sur des plaques en acier ou en aluminium. On les faits durcir 12 à 15 minutes à 200°C, température du substrat. Une fois le durcissement effectué, on observe la brillance (mate) des échantillons appliqués. Sur le tableau 1 sont résumés les résultats et les propriétés. Le problème dudit système est qu'il nécessite la fabrication de deux peintures et le mélange de poudres broyées (dry-blend). Ce système présente l'inconvénient d'une reproductibilité faible et de petites variations impliquent des variations du degré de brillance.

### EXEMPLE B

Peinture pigmentée blanche résistant à l'extérieur, base Primid. Système dry-blend, mélange des peintures 1 et 2 comme dans l'exemple A.

| | nom commercial | composition composition poudre N°1 poudre N°2 | |
|---|---|---|---|
| constituants | | Parties en masse (grammes) | |
| Polyester carboxylé 95/5 | REAFREE 8580 | 570,0 | - |
| Polyester carboxylé 89/11 | REAFREE 8180 | - | 540,0 |
| Réticulant hydroxyalkylamide | Primid XL-552 (EMS-Chemie) | 30,0 | 60,0 |
| Benzoine | | 2,0 | 2,0 |
| Agent d'étalement | Byk 360-P | 6,0 | 6,0 |
| Bioxyde de Titane | RL 60 de Rhône Poulenc | 390,0 | 390,0 |

Présente les mêmes inconvénients que A.

### EXEMPLE C

Peinture pigmentée blanche résistant à l'extérieur, à base de TGIC. Utilisation d'un agent matifiant à haute acidité.

| | nom commercial | composition poudre |
|---|---|---|
| constituants | | Parties en masse (grammes) |
| Polyester carboxylé 96/4 | REAFREE 44O1 | 540,0 |
| Triglycidylisocyanurate | Araldite PT810 (Ciba) | 91,0 |
| Agent matifiant | XB 4957 | 53,0 |
| Benzoine | | 2,0 |
| Agent d'étalement | Byk 360-P | 6,0 |
| Bioxyde de Titane | RL 60 de Rhône Poulenc | 328,0 |
| Accélérateur | DT 3126 | 6,0 |

La peinture présente un excellent aspect mat, une faible brillance à 60°C et 85°C, mais les propriétés mécaniques sont complètement insuffisantes.

### EXEMPLE D

Peinture pigmentée blanche résistant à l'extérieur, à base de TGIC. (Triglycidylisocyanurate) Utilisation d'une cire matifiante.

| | nom commercial | composition poudre |
|---|---|---|
| | | Parties en masse (grammes) |
| constituants | | D |
| Polyester carboxylé 96/4 | REAFREE 44O1 | 583,0 |
| Triglycidylisocyanurate | Araldite PT810 (Ciba) | 44,0 |
| Cire matifiante | DT 3329-1 | 52,0 |
| Benzoine | | 2,0 |
| Agent d'étalement | Byk 360-P | 6,0 |
| Bioxyde de Titane | RL 60 de Rhône Poulenc | 313,0 |
| Accélérateur | DT 3126 | 6,0 |

L'aspect mat obtenu est insuffisant, bien que les autres propriétés soient correctes.

### EXEMPLE E

Peinture pigmentée blanche polyuréthanne résistante à l'extérieur, à base de prépolymère, d'isophorone di-isocyanate masquée avec de ε-caprolactame pour l'extérieur.

| | nom commercial | composition poudre |
|---|---|---|
| constituants | | Parties en masse (grammes) |
| Polyester hydroxylé, OH = 40- 50 | REAFREE 3300 | 448,2 |
| prépolymère IPDI masqué caprolactame | Vestagon BF-1530 de HULS | 129,8 |
| cire micronisée | Cerafluor 961 de BYK-CERA | 20,0 |
| Benzoine | | 3,0 |
| Agent d'étalement | BYK 360-P de BYK-CHEMIE | 9,0 |
| Bioxyde de Titane | RL 60 de Rhône Poulenc | 290,0 |
| Baryte | | 100,0 |

Les propriétés mécaniques sont acceptables mais la matité reste faible.

### EXEMPLE F

Peinture en poudre blanche polyuréthanne mate pour l'extérieur.

Selon ce qui est indiqué dans la présente invention, l'utilisation d'un polyester spécial avec le prépolymère d'isocyanate indiqué permet d'obtenir des systèmes mats ayant de bonnes propriétés mécaniques et de tenue en extérieur.

| | nom commercial | composition poudre N°1 |
|---|---|---|
| constituants | | Parties en masse (grammes) |
| Polyester hydroxylé, OH : 40-50 | REAFREE 7000 | 502,0 |
| prépolymère "trimère" HDI masqué parahydroxy-benzoate de méthyle | Tolonate® HDT masqué parahydroxy-benzoate de méthyle | 76,0 76,0 |
| Cire micronisée | CEREFLUOR (BYK 961) | 20,0 |
| Benzoine | | 3,0 |
| Agent de nivellement | Byk 360-P | 9,0 |
| Bioxyde de Titane | RL 60 de Rhône Poulenc | 290,0 |
| Baryte | | 100,0 |

Les propriétés mécaniques sont exceptionnelles (mais cela n'apparaît pas dans le test car les conditions ne permettent pas de les mettre en évidence le maximum étant atteint partout) et la matité bonne.

### EXEMPLE G

Exemple croisé dans lequel on utilise l'ester de l'exemple F avec l'isocyanate de l'exemple E

| | nom commercial composition poudre N°1 | |
|---|---|---|
| constituants | | Parties en masse (grammes) |
| Polyester hydroxylé, OH : 40-50 | REAFREE 7000 | 448,2 |
| prépolymère IPDI Masqué caprolactame | Vestagon BF-1530. de Vestagon BF-1530. de HULS | 129,8 129,8 |
| Cire micronisée | Cerafluor 961 de BYK-CERA | 20,0 |
| Benzoine | | 3,0 |
| Agent d'étalement | BYK 360-P de BYK-CHEMIE | 9,0 |
| Bioxyde de Titane | RL 60 de Rhône Poulenc | 290,0 |
| Baryte | | 100,0 |

**TABLEAU 1**

| Peinture | Exemple A | Exemple B | Exemple C | Exemple D | Exemple E | Exemple F | Exemple G |
|---|---|---|---|---|---|---|---|
| Durcissement | 12' 200°C | 15' 200°C | 12' 200°C | 12' 200°C | 15' 200°C | 15' 200°C | 15' 200°C |
| Brillance 20°C | 5,8 | 9,0 | 1,9 | 9,5 | 52 | 7,2 | 24 |
| Brillance 60°C | 26,5 | 34,3 | 4,5 | 42,9 | 71," | 29,9 | 63 |
| Brillance 85°C | 27,8 | 32,8 | 15,9 | 59,8 | 99 | 34,4 | 90 |
| Impact direct (cm) | 75 | 75 | 20 | 75 | 75 | 75 | 75 |
| Impact inverse | 75 | 75 | 0 | 75 | 75 | 75 | 75 |
| Adhérence | 100 | 100 | 100 | 100 | 100 | 100 | 100 |
| Pliage (mandrin conique) (%) | 100 | 100 | 100 | 100 | 100 | 100 | 100 |
| Résistance à la méthyl-éthylcétone (butanone) (Double passage) | > 200 | >200 | 40 | > 200 | > 200 | > 200 | > 200 |
| Tenue en extérieur | Excellente | Excellente | Bonne | Excellent | Excellente | Excellente | Excellente |

### Exemple H : Peinture blanche

| **MATIERES** | | | |
|---|---|---|---|
| REAFREE 7000 | 454,0 | 443,0 | 453,0 |
| HDT masqué PHBM | 121,0 | | |
| HDT/IPDT (75/25) | | 132,0 | |
| HDT masqué PHBM/PHBA (80/20) | | | 122,0 |
| oxalate d'étain | 3,0 | 3,0 | 3,0 |
| CERAFLOUR 961 | 20,0 | 20,0 | 20,0 |
| BLANC FIXE ABR | 100,0 | 100,0 | 100,0 |
| Benzoîne | 3,0 | 3,0 | 3,0 |
| BYK 360P | 9,0 | 9,0 | 9,0 |
| TiO2 (RL-68) | 290,0 | 290,0 | 290,0 |
| **TOTAL** | **1000,00** | **1000,00** | **1000,00** |

| **caractéristiques des peintures après cuisson** | | | |
|---|---|---|---|
| SUBSTRAT | Acier (R-36) | | |
| cuisson (température/temps) | 200°C 20 m | 200°C 20m | 200°C 20 m |
| ASPECT/COUCHE (microns) | MAT 60 | SAT/60 | MAT/60 |
| IMPACT (DIRECT/INVERSE) | 45/10 | 75/35 | 75/75 |
| ADHERENCE/EMBOUTISSAGE | 100/5 | 10019.5 | 100/>10 |
| PLIAGE | 100 | 100 | 100 |
| Résistance MEK | 105 | > 200 | > 200 |
| BRILLANCE 20°C | 5 | 6 | 3 |
| BRILLANCE 60°C | 30 | 35 | 15 |
| BRILLANCE 85°C | 50 | 67 | 19 |

| SUBSTRAT | Acier (R-36) | | |
|---|---|---|---|
| Cuisson (Température/Temps) | 210°C 20 mn | | |
| ASPECT/COUCHE (microns) | MAT-SA 60 | SAT**/60 | MAT/60 |
| IMPACT (DIRECT/INVERSE) | 75/75 | 75/75 | 75/75 |
| ADHERENCE/EMBOUTISSAGE | 100/>10 | 100/>10 | 100/> 10 |
| PLIAGE | 100 | 100 | 100 |
| Résistance MEK | > 200 | > 200 | > 200 |
| BRILLANCE 20°C | 5,7 | 6,3 | 2,5 |
| BRILLANCE 60°C | 30 | 35 | 15 |
| BRILLANCE 85°C | 55 | 70 | 20 |

| | | | |
|---|---|---|---|
| **SAT= satiné | | | |

### Exemple I : Peinture blanche

| **MATIERES** | | |
|---|---|---|
| REAFREE 7000 | 452,2 | 451,5 |
| HMDT 35% PHB ; 65% PHBM* * | 122,8 | |
| HMDT 50% PHB ; 50% PHBM | | 123,50 |
| SnC₂O₄ | 3,0 | 3,0 |
| CERAFLOUR 961 | 20,0 | 20,0 |
| BLANC FIXE ABR | 100,0 | 100,0 |
| Benzoîne | 3,0 | 3,0 |
| BYK 360P | 9,0 | 9,0 |
| TiO2 (RL-68) | 290,0 | 290,0 |

| **TOTAL** | **1000,00 1000,00** | |
|---|---|---|
| SUBSTRAT | Acier (R-36) | |
| cuisson (température/temps) | 200°C 20m | 200°C 20 m |
| ASPECT/COUCHE (microns) | MA-RU 70 | MA-RU 70 |
| IMPACT (DIRECT/INVERSE) | 75/75 | 75/75 |
| ADHERENCEIEMBOUTISSAGE | 100/>10 | 100/> 10 |
| PLIAGE | 100 | 100 |
| Résistance MEK | > 200 | > 200 |
| BRILLANCE 20°C | 3,4 | 2,1 |
| BRILLANCE 60°C | 18,7 | 7,0 |
| BRILLANCE 85°C | 32,3 | 9,0 |

| SUBSTRAT | Acier (R-36) | |
|---|---|---|
| cuisson (température/temps) | 210°C 20m | 210°C 20 m |
| ASPECT/COUCHE (microns) | MA-RU 70 | MA-RU 70 |
| IMPACT (DIRECT/INVERSE) | 75/75 | 75/75 |
| ADHERENCE/EMBOUTISSAGE | 100/> 10 | 100/> 10 |
| PLIAGE | 100 | 100 |
| Résistance MEK | > 200 | > 200 |
| BRILLANCE 20°C | 3,4 | 2,2 |
| BRILLANCE 60°C | 18,4 | 7,9 |
| BRILLANCE 85°C | 31,1 | 10,4 |

### Exemple J : Peinture blanche

| **MATIERES** | | | |
|---|---|---|---|
| | | | |
| REAFREE 7000 | 450,0 | 171 | 451 |
| oxalate d'étain | 4 | 1,4 | 4 |
| (CaC03) | 20,0 | 8,0 | 20,0 |
| HDT masqué pHBM | 120,0 | | |
| IPDT masqué pHBM | | 54,8 | |
| HDT masqué N-hydroxysuccinimide | | | 113,0 |
| CERAFLOUR 961 - | 20,0 | 8,0 | 20,0 |
| BLANC FIXE ABR | 80,0 | 36,0 | 90,0 |
| Benzoïne | 3,0 | 1,2 | 3,0 |
| BYK 360P | 9,0 | 3,6 | 9,0 |
| Ti02 (RL-68) | 290,0 | 116,0 | 290,0 |
| MILLICARB (Ca C03) | 10,0 | | |
| **TOTAL** | **1000,00** | **400,00** | **1000,00** |

| **CARACTERISTIQUES** | | | |
|---|---|---|---|
| SUBSTRAT | Acier (R-36) | Acier (R-36) | Acier (R-36) |
| CUISSON (TEMPERATURE/TEMPS) | 210°C 20 m | 200°C 20 m | 200°C 20 m |
| ASPECT/COUCHE (microns) | MAT/50 | SAT/80 | SAT*/70 |
| IMPACT (DIRECT/INVERSE) | 75/75 | 75/40 | 75/75 |
| ADHERENCE/EMBOUTISSAGE | 100/>10 | 100/5.4 | 100/> 10 |
| PLIAGE | 100 | 0 | 100 |
| Résistance MEK | > 200 | 150 | >200 |
| BRILLANCE 20°C | 4 | 19 | 18 |
| BRILLANCE 60°C | 23 | 50,0 | 55** |
| BRILLANCE 85°C | 60 | 71 | 75 |

| | | | |
|---|---|---|---|
| *jaunissement | | | |
| **pratiquement à la limite du satiné, voire au dessus | | | |

### Exemple K : Peinture noire mate structurée

| **MATIERES** | |
|---|---|
| SnCl₂ | 3 |
| REAFREE 7000 | 443,0 |
| RHODOCOAT XD2D (HMDT masqué pHBM) | 117,00 |
| DOLOMIE | 92,0 |
| BLANC FIXE ABR | 298,0 |
| CERAFLOUR 961 | 20,0 |
| BYK 360P | 9,0 |
| Benzoïne | 3,0 |
| Raven 1020 (carbon black) | 15,0 |
| TOTAL | 1000,00 |

| **caractéristiques** | |
|---|---|
| SUBSTRAT | |
| CUISSON (TEMPERATURE/TEMPS) | 200°C 20 m |
| ASPECT/COUCHE (microns) | |
| IMPACT (DIRECT/INVERSE) | 75/75 |
| ADHERENCE/EMBOUTISSAGE | 100 |
| PLIAGE | 100 |
| Résistance MEK | 100 |
| BRILLANCE 20°C | 1,2 |
| BRILLANCE 60°C | 6,1 |
| BRILLANCE 85°C | 9,5 |

### Exemple L : Peinture blanche mate

| **MATIERES** | |
|---|---|
| | |
| REAFREE 7000 | 464,0 |
| oxalate d'étain | 4 |
| RHODOCOAT XD2D | 120,00 |
| TITAFRAN RL-68 | 290,0 |
| BLANC FIXE ABR | 90,0 |
| CERAFLOUR 961 | 20,0 |
| BYK 360P | 9,0 |
| Benzoïne | 3,0 |

| **TOTAL** | **1000,00** |
|---|---|
| CUISSON (TEMPERATURE/TEMPS) | 200°C 20 m |
| IMPACT (DIRECT/INVERSE) | 75/75 |
| ADHERENCE/EMBOUTISSAGE | 100 |
| PLIAGE | 100 |
| Résistance MEK | > 200 |
| BRILLANCE 60°C | 17,8 |
| BRILLANCE 85°C | 34,4 |

### Exemple M : Formulations de couleur

| **MATIERES** | **PEINTURE ROUGE MATE** | **PEINTURE BRUNE MATE** | **PEINTURE NOIRE MATE** |
|---|---|---|---|
| REAFREE 7000 | 454,0 | 453,0 | 451,0 |
| catalyseur insoluble | 2 | 2,6 | 3 |
| RHODOCOAT XD2D | 117,0 | 117,0 | 117,0 |
| DOLOMIT | 92 | 92 | 92 |
| BLANC FIXE ABR | 260 | 264,7 | 290 |
| CERAFLOUR 961 | 20 | 20,0 | 20 |
| BYK 360P | 9 | 9,0 | 9 |
| Benzoïne | 3 | 3 | 3 |
| Raven 1020 | | | 15 |
| Bayferrox 130 | 20,9 | 12 | |
| Printex V | 0,2 | 2,7 | |
| Cinquasia Violet R RT 887 D | 17,6 | | |
| Hornachrome yellow GMXH-35-SQ | | 14,2 | |
| Ti Pure R-960 | 4,2 | 9,8 | |

| **TOTAL** | **1000,00** | **1000,00** | **1000,00** |
|---|---|---|---|
| caractéristiques | | | |
| SUBSTRAT | | | |
| CUISSON (TEMPERATURE/TEMPS) | 200°C 20 m | 200°C 20m | 200°C 20 m |
| ASPECT/COUCHE (microns) | | | |
| IMPACT (DIRECT/INVERSE) | 75/75 | 75/75 | 75/75 |
| ADHERENCE/EMBOUTISSAGE | 100 | 100 | 100 |
| PLIAGE | 100 | 100 | 100 |
| Résistance MEK | >200 | > 200 | > 200 |
| BRILLANCE 20°C | 3,3 | 2,8 | 1,7 |
| BRILLANCE 60°C | 19,7 | 15,4 | 11,0 |
| BRILLANCE 85°C | 47,6 | 35,5 | 30,0 |

## Revendications

1. Composition pour peinture en poudre mate ou satinée, comportant pour addition successive ou simultanée :
→ un isocyanate au moins partiellement masqué présentant un température de transition vitreuse d'au moins 20°C, et un taux de libération (vis-à-vis de l'agent masquant) à 120°C d'au plus 5%
→ un polyol présentant les caractéristiques suivantes :
◆ une température de transition vitreuse au moins égale à 40°C,
◆ un indice d'hydroxyle au moins égal à environ 10 mg/g,
◆ une masse moléculaire moyenne Mn au moins égale à 1000 ;
l'agent masquant étant choisi parmi ceux de la formule (I):
Ar(R)ₙ(Y-Z)ₘ(OH)ₚ (I)
où Ar est un reste aromatique,
les valeurs de n, m et p sont telles que la somme n + m + p soit au plus égale au nombre de sommets substituables ;
R représente des chaînes hydrocarbonées, deux groupes vicinaux R peuvent être reliés entre eux pour former un cycle qui peut être aromatique ;
Z est choisi parmi les groupements présentant une fonction carbonyle ;
Y est choisi parmi les groupements divalents ou une liaison simple.

2. Composition selon la revendication 1. dans laquelle l'agent masquant est de formule (I) et Ar est un noyau benzénique.

3. Composition selon la revendication 1 ou 2, dans laquelle l'agent masquant est de formule (I) et Z est un groupe ester.

4. Composition selon l'une des revendications 1 à 3, dans laquelle l'agent masquant est de formule (I) et Z est un groupe acide.

5. Composition selon l'une des revendications 1 à 4, dans laquelle l'agent masquant est un acide carboxylique directement greffé sur un noyau benzénique.

6. Composition selon l'une des revendications 1 à 5, dans laquelle l'agent masquant est un acide méta- ou para-hydroxybenzénique ou l'un de leurs esters.

7. Composition selon l'une des revendications 1 à 6, dans laquelle au moins 10% des fonctions isocyanates sont masquées par un agent masquant acide.

8. Composition selon l'une des revendications 1 à 7, dans laquelle au plus 9/10 des fonctions isocyanates sont masquées par un agent masquant acide.

9. Composition selon l'une des revendications 1 à 8, dans laquelle les isocyanates sont au moins partiellement masqués par un composé de formule (I) où Z est un groupe acide et un autre agent masquant de formule (I) où Z est un groupe ester.

10. Composition selon l'une des revendications 1 à 9, dans laquelle l'isocyanate est un isocyanate aliphatique.

11. Composition selon l'une des revendications 1 à 10, dans laquelle l'isocyanate est tétraméthylène-diisocyanate.

12. Composition selon l'une des revendications 1 à 11, dans laquelle l'isocyanate est le hexaméthylène-diisocyanate.

13. Composition selon l'une des revendications 1 à 12, **caractérisée par le fait que** l'indice d'hydroxyle dudit polyol varie entre 10 et 350 mg KOH/g, de préférence entre 15 et 80,

14. Composition selon les revendications 1 à 13, **caractérisée par le fait que** l'indice d'acidité est au plus égal à 20 mg KOH/g, compris de préférence entre 3 et 15 mg KOH/g.

15. Composition selon les revendications 1 à 14, **caractérisée par le fait que** la masse moléculaire moyenne Mn du polyol varie entre 2000 et 15000g/mo.

16. Composition selon les revendications 1 à 15, **caractérisée par le fait que** le polyol présente un point de fusion au plus égal à 130°C, avantageusement à 110°C, de préférence à 100°C.

17. Composition selon les revendications 1 à 16, **caractérisée par le fait que** après mélange, la composition est mise sous forme de poudre.

18. Composition selon la revendication 1 à 17, **caractérisée par le fait que** la poudre présente un d₉₀ au plus égal à 100 micromètres avantageusement à 50 micromètres.

19. Composition selon les revendications 16 et 18, **caractérisée par le fait que** la poudre présente un d₁₀ au moins égal à 20 micromètres avantageusement à 50 micromètres.

20. Composition selon les revendications 1 à 19, **caractérisée par le fait qu'**elle comporte en outre du bioxyde de titane.

21. Composition selon les revendications 1 à 20, **caractérisée par le fait qu'**elle comporte en outre un catalyseur présentant l'une des, de préférence les deux caractéristiques suivantes ;
- une faible liposolubilité ;
- une forme solide, avantageusement cristallisée.

22. Composition selon les revendications 1 à 21, **caractérisée par le fait qu'**elle présente une granulométrie définie par un d₉₀ au plus égal à 200 micromètres avantageusement à 100 micromètres et un d₁₀ au moins égal à 20 micromètres avantageusement à 50 micromètres.

23. Procédé pour préparer les compositions selon les revendications 1 à 22, **caractérisé par le fait qu'**il comporte une étape où l'on prémalaxe les composés de la formulation dans un malaxeur puis où l'on fait fondre le polyol et avantageusement les autres composants fusibles à la température choisie, on les homogénéise et les disperse dans une extrudeuse à une ou plusieurs vis.

24. Procédé selon la revendication 23, **caractérisé par le fait que** la température de malaxage et d'extrusion est au plus égale à 130°C, avantageusement à 110°C, de préférence à 100°C.

25. Procédé selon les revendications 23 ou 24, **caractérisé par le fait que** la température d'extrusion est au moins égale à 60°C, avantageusement à 70°C, de préférence de 80-90°C.

26. Procédé selon les revendications 23 à 25, **caractérisé par le fait qu'**il comporte en outre une étape de refroidissement, suivie d'une étape de broyage pour obtenir une granulométrie définie par un d₉₀ au plus égal à 200 micromètres, avantageusement à 100 micromètres et un d₁₀ au moins égal à 20 micromètres avantageusement à 50 micromètres.

27. Revêtement obtenu par l'utilisation de la composition selon les revendications 1 à 22.

## Claims

1. Matt or satin powder coating composition, comprising, for addition in succession or simultaneously:
→ an at least partially masked isocyanate having a glass transition temperature of at least 20°C and a rate of release (in respect of the masking agent) at 120°C of not more than 5%;
→ a polyol having the following characteristics:
◆ a glass transition temperature of at least 40°C,
◆ a hydroxyl number of at least approximately 10 mg/g,
◆ an average molar mass Mn of at least 1000;
the masking agent being selected from those of formula (I):
Ar(R)ₙ(Y-Z)ₘ(OH)ₚ (I)
wherein Ar is an aromatic radical,
the values of n, m and p are such that the sum n + m + p does not exceed the number of substitutable ring members;
R represents hydrocarbon chains, two vicinal groups R can be bonded together to form a ring which can be aromatic;
Z is selected from groups having a carbonyl function;
Y is selected from divalent groups or a single bond.

2. Composition according to claim 1, in which the masking agent has the formula (I) and Ar is a benzene nucleus.

3. Composition according to claim 1 or 2, in which the masking agent has the formula (I) and Z is an ester group.

4. Composition according to any one of claims 1 to 3, in which the masking agent has the formula (I) and Z is an acid group.

5. Composition according to any one of claims 1 to 4, in which the masking agent is a carboxylic acid grafted directly onto a benzene nucleus.

6. Composition according to any one of claims 1 to 5, in which the masking agent is a meta- or para-hydroxybenzoic acid or an ester thereof.

7. Composition according to any one of claims 1 to 6, in which at least 10% of the isocyanate functions are masked by an acidic masking agent.

8. Composition according to any one of claims 1 to 7, in which not more than 9/10 of the isocyanate functions are masked by an acidic masking agent.

9. Composition according to any one of claims 1 to 8, in which the isocyanates are at least partially masked by a compound of formula (I) wherein Z is an acid group and by a different masking agent of formula (I) wherein Z is an 5 ester group.

10. Composition according to any one of claims 1 to 9, in which the isocyanate is an aliphatic isocyanate.

11. Composition according to any one of claims 1 to 10, in which the isocyanate is tetramethylene diisocyanate.

12. Composition according to any one of claims 1 to 11, in which the isocyanate is hexamethylene diisocyanate.

13. Composition according to any one of claims 1 to 12, **characterised in that** the hydroxyl number of said polyol varies from 10 to 350 mg KOH/g, preferably from 15 to 80.

14. Composition according to claims 1 to 13, **characterised in that** the acid number is not more than 20 mg KOH/g and is preferably from 3 to 15 mg KOH/g.

15. Composition according to claims 1 to 14, **characterised in that** the average molar mass Mn of the polyol varies from 2000 to 15,000 g/mol.

16. Composition according to claims 1 to 15, **characterised in that** the polyol has a melting point of not more than 130°C, advantageously not more than 110°C, preferably not more than 100°C.

17. Composition according to claims 1 to 16, **characterised in that**, after mixing, the composition is brought into the form of a powder.

18. Composition according to claims 1 to 17, **characterised in that** the powder has a d₉₀ of not more than 100 micrometres, advantageously not more than 50 micrometres.

19. Composition according to claims 16 and 18, **characterised in that** the powder has a d₁₀ of at least 20 micrometres, advantageously at least 50 micrometres.

20. Composition according to claims 1 to 19, **characterised in that** it further comprises titanium dioxide.

21. Composition according to claims 1 to 20, **characterised in that** it further comprises a catalyst having one, preferably both, of the following characteristics:
- low liposolubility;
- a solid, advantageously crystalline form.

22. Composition according to claims 1 to 21, **characterised in that** it has a granulometry defined by a d₉₀ of not more than 200 micrometres, advantageously not more than 100 micrometres, and a d₁₀ of at least 20 micrometres, advantageously at least 50 micrometres.

23. Process for the preparation of the compositions according to claims 1 to 22, **characterised in that** it comprises a step wherein the compounds of the formulation are pre-mixed in a mixer and then the polyol and advantageously the other constituents that are fusible at the chosen temperature are melted, homogenised and dispersed in a single- or multi-screw extruder.

24. Process according to claim 23, **characterised in that** the mixing and extrusion temperature does not exceed 130°C, advantageously 110°C, preferably 100°C.

25. Process according to claim 23 or 24, **characterised in that** the extrusion temperature is at least 60°C, advantageously at least 70°C, preferably from 80 to 90°C.

26. Process according to claims 23 to 25, **characterised in that** it further comprises a cooling step, followed by a grinding step in order to obtain a granulometry defined by a d₉₀ of not more than 200 micrometres, advantageously not more than 100 micrometres, and a d₁₀ of at least 20 micrometres, advantageously at least 50 micrometres.

27. Coating obtained by the use of the composition according to claims 1 to 22.

## Patentansprüche

1. Zusammensetzung für einen matten oder seidenmatten Pulverlack, umfassend zur aufeinanderfolgenden oder gleichzeitigen Zugabe:
→ ein mindestens teilweise maskiertes Isocyanat, das eine Glasübergangstemperatur von wenigstens 20°C und eine Freisetzungsrate (gegenüber dem Maskierungsmittel) bei 120°C von höchstens 5% zeigt,
→ ein Polyol, das die folgenden Eigenschaften zeigt:
◆ eine Glasübergangstemperatur von mindestens 40°C,
◆ einen Hydroxyindex von mindestens etwa 10 mg/g,
◆ eine mittlere Molmasse Mn von mindestens 1000,
wobei das Maskierungsmittel aus denen der Formel (I) ausgewählt ist:
Ar(R)ₙ(Y-Z)ₘ(OH)ₚ (I)
worin Ar ein aromatischer Rest ist,
die Werte von n, m und p solcherart sind, daß die Summe n + m + p höchstens gleich der Anzahl der substituierbaren Ringatome ist,
R Kohlenwasserstoffketten darstellt und zwei benachbarte Gruppen R unter Bilden eines Cyclus, der aromatisch sein, miteinander verbunden sein können,
Z aus den eine Carbonylfunktion aufweisenden Gruppen ausgewählt ist und
Y aus zweiwertigen Gruppen oder einer Einfachbindung ausgewählt ist.

2. Zusammensetzung gemäß Anspruch 1, bei der das Maskierungsmittel von der Formel (I) ist und Ar ein Benzolkern ist.

3. Zusammensetzung gemäß Anspruch 1 oder 2, bei der das Maskierungsmittel von der Formel (I) ist und Z eine Estergruppe ist.

4. Zusammensetzung gemäß einem der Ansprüche 1 bis 3, bei der das Maskierungsmittel von der Formel (I) ist und Z eine Säuregruppe ist.

5. Zusammensetzung gemäß einem der Ansprüche 1 bis 4, bei der das Maskierungsmittel eine direkt an einen Benzolkern gebundene Carbonsäure ist.

6. Zusammensetzung gemäß einem der Ansprüche 1 bis 5, bei der das Maskierungsmittel eine m- oder p-Hydroxybenzoesäure oder einer ihrer Ester ist.

7. Zusammensetzung gemäß einem der Ansprüche 1 bis 6, bei der mindestens 10% der Isocyanatfunktionen durch ein Säuremaskierungsmittel maskiert sind.

8. Zusammensetzung gemäß einem der Ansprüche 1 bis 7, bei der höchstens 9/10 der Isocyanatfunktionen durch ein Säuremaskierungsmittel maskiert sind.

9. Zusammensetzung gemäß einem der Ansprüche 1 bis 8, bei der die Isocyanate mindestens teilweise durch eine Verbindung der Formel (I), worin Z eine Säuregruppe ist, und ein anderes Maskierungsmittel der Formel (I), worin Zeine Estergruppe ist, maskiert sind.

10. Zusammensetzung gemäß einem der Ansprüche 1 bis 9, bei der das Isocyanat ein aliphatisches Isocyanat ist.

11. Zusammensetzung gemäß einem der Ansprüche 1 bis 10, bei der das Isocyanat Tetramethylendiisocyanat ist.

12. Zusammensetzung gemäß einem der Ansprüche 1 bis 11, bei der das Isocyanat Hexamethylendiisocyanat ist.

13. Zusammensetzung gemäß einem der Ansprüche 1 bis 12, **dadurch gekennzeichnet, daß** der Hydroxyindex des Polyols zwischen 10 und 350 mg KOH/g, bevorzugt zwischen 15 und 80 schwankt.

14. Zusammensetzung gemäß einem der Ansprüche 1 bis 13, **dadurch gekennzeichnet, daß** der Säureindex höchstens 20 mg KOH/g, bevorzugt zwischen 3 und 15 mg KOH/g ist.

15. Zusammensetzung gemäß den Ansprüchen 1 bis 14, **dadurch gekennzeichnet, daß** die mittlere Molmasse Mn des Polyols zwischen 2000 und 15000 g/Mol schwankt.

16. Zusammensetzung gemäß den Ansprüchen 1 bis 15, **dadurch gekennzeichnet, daß** das Polyol einen Schmelzpunkt von höchstens 130°C, vorteilhafterweise 110°C, bevorzugt 100°C zeigt.

17. Zusammensetzung gemäß den Ansprüchen 1 bis 16, **dadurch gekennzeichnet, daß** die Zusammensetzung nach dem Mischen pulverisiert wird.

18. Zusammensetzung gemäß Anspruch 1 bis 17, **dadurch gekennzeichnet, daß** das Pulver einen d₉₀ von höchstens 100 Mikrometer, vorteilhafterweise 50 Mikrometer zeigt.

19. Zusammensetzung gemäß den Ansprüchen 16 und 18, **dadurch gekennzeichnet, daß** das Pulver einen d₁₀ von mindestens 20 Mikrometer, vorteilhafterweise 50 Mikrometer zeigt.

20. Zusammensetzung gemäß den Ansprüchen 1 bis 19, **dadurch gekennzeichnet, daß** sie außerdem Titandioxid umfaßt.

21. Zusammensetzung gemäß den Ansprüchen 1 bis 20, **dadurch gekennzeichnet, daß** sie außerdem einen Katalysator umfaßt, der eine der, vorzugsweise beide folgenden Eigenschaften zeigt:
- eine schwache Fettlöslichkeit,
- eine feste, vorteilhafterweise kristalline Form.

22. Zusammensetzung gemäß den Ansprüchen 1 bis 21, **dadurch gekennzeichnet, daß** sie eine durch einen d₉₀ von höchstens 200 Mikrometer, vorteilhafterweise 100 Mikrometer und einen d₁₀ von mindestens 20 Mikrometer, vorteilhafterweise 50 Mikrometer definierte Granulometrie zeigt.

23. Verfahren zum Herstellen der Zusammensetzungen gemäß den Ansprüchen 1 bis 22, **dadurch gekennzeichnet, daß** es einen Schritt, bei dem man die Verbindungen der Formulierung in einem Kneter vorknetet, bei dem man dann das Polyol und vorteilhafterweise die anderen bei der gewählten Temperatur schmelzbaren Komponenten schmelzen läßt und sie in einem Extruder mit einer oder mehreren Schrauben homogenisiert und dispergiert.

24. Verfahren gemäß Anspruch 23, **dadurch gekennzeichnet, daß** die Knet- und Extrusionstemperatur höchstens 130°C, vorteilhafterweise 110°C, bevorzugt 100°C ist.

25. Verfahren gemäß den Ansprüchen 23 oder 24, **dadurch gekennzeichnet, daß** die Extrusionstemperatur mindestens 60°C, vorteilhafterweise 70°C, bevorzugt 80-90°C ist.

26. Verfahren gemäß den Ansprüchen 23 bis 25, **dadurch gekennzeichnet, daß** es außerdem einen Abkühlschritt, gefolgt von einem Mahlschritt umfaßt, um eine Granulometrie zu erhalten, die durch einen d₉₀ von höchstens 200 Mikrometer, vorteilhafterweise 100 Mikrometer und einen d₁₀ von mindestens 20 Mikrometer, vorteilhafterweise 50 Mikrometer definiert ist.

27. Beschichtung erhalten durch die Verwendung der Zusammensetzung gemäß den Ansprüchen 1 bis 22.
